# EUROPÄISCHE PATENTSCHRIFT

(11) **EP 3 473 907 B1**
(45) Veröffentlichungstag und Bekanntmachung des Hinweises auf die Patenterteilung: **22.07.2026**
(21) Anmeldenummer: 18200182.6
(22) Anmeldetag: 12.10.2018
(51) Int. Cl.: F16K 37/00

(54) **DIAGNOSEVERFAHREN FÜR EIN STELLGERÄT UND STELLGERÄT MIT EINER DIAGNOSEVORRICHTUNG**
DIAGNOSTIC METHOD FOR A POSITIONING DEVICE AND POSITIONING DEVICE WITH OF A DIAGNOSTIC DEVICE
PROCÉDÉ DE DIAGNOSTIC POUR UN DISPOSITIF DE RÉGLAGE ET DISPOSITIF DE RÉGLAGE DOTÉ D'UN DISPOSITIF DE DIAGNOSTIC

(30) Priorität: 18.10.2017 DE 102017124293
(43) Veröffentlichungstag der Anmeldung: 24.04.2019
(73) Patentinhaber: Samson Aktiengesellschaft, 60314 Frankfurt am Main (DE)
(72) Erfinder: Wagner-Stürz, David, 64367 Mühltal (DE)
(74) Vertreter: Schmid, Nils T.F.

(56) Entgegenhaltungen:
- EP-A2- 2 423 547
- DE-A1- 102012 111 883
- DE-U1- 202004 020 347
- US-A- 4 856 327
- US-A- 5 594 175

## Beschreibung

Die Erfindung betrifft ein Diagnoseverfahren für ein Stellgerät einer prozesstechnischen Anlage, wie ein Kraftwerk, beispielsweise ein Nuklearkraftwerk, eine chemische Anlage, beispielsweise eine petrochemische Anlage, eine Lebensmittel verarbeitende Anlage oder dergleichen. Die Erfindung betrifft auch ein Stellgerät für eine prozesstechnische Anlage, das einen Stellantrieb, eine Stellarmatur, eine Drehverbindung, wie eine formschlüssige Drehmomentkupplung, beispielsweise eine Klauenkupplung, zur Verbindung einer Antriebswelle mit einer Stellwelle sowie eine Diagnosevorrichtung umfasst. Das Diagnoseverfahren kann dazu dienen, ein Drehspiel der formschlüssigen Drehmomentkupplung zu erkennen. Die Diagnosevorrichtung kann zum Durchführen eines Diagnoseverfahrens zur Erkennung von Drehspiel der Drehverbindung eingerichtet sein.

DE 20 2004 020 347 U1 beschreibt einen pneumatischen Schwenkantrieb zum Stellen eines Stellorgans, beispielsweise eines Ventils, mit einer Antriebswelle, die über eine Kupplungsschnittstelle mit einer Stellwelle des Stellorgans lösbar gekoppelt ist. Der pneumatische Schwenkantrieb verfügt über eine Sensorik mit einem ersten Weg-Sensor zum Erfassen der Stellung der Antriebswelle und mit einem zweiten Weg-Sensor zum Erfassen der Stellung der Stellwelle. Der erste und der zweite Sensor sind mit einer Einrichtung zum Vergleichen der Sensorsignale verbunden. Der pneumatische Schwenkantrieb verfügt ferner über eine Einrichtung zum Interpretieren und Auswerten des Vergleichssignals von der Vergleichseinrichtung, um beispielsweise eine Winkeldifferenz zwischen der Antriebswelle und der Stellwelle zu erfassen. Auf diese Weise können typische und untypische Abnutzungszustände des Stellorgans identifiziert werden. Gemäß DE 20 2004 020 347 U1 kann in der Kupplungsschnittstelle zwischen Antriebswelle und Stellwelle ein mechanisches Spiel vorhanden sein. In Folge des Spiels wird eine beispielsweise öffnende Stellbewegung der Antriebswelle erst nach einer Zeitdifferenz auf die Stellwelle übertragen. Nach Überwindung des mechanischen Spiels ändert sich die Winkelposition der angetriebenen Stellwelle entsprechend der Antriebswelle. Die Winkelpositionen verlaufen dann im Wesentlichen parallel zueinander, wobei eine leichte Divergenz in Folge einer elastischen Verformung von Stellwelle, Antriebswelle und Kupplungsschnittstelle zwischen dem ersten und dem zweiten Sensor vorliegen kann. Die zeitliche Verzögerung beziehungsweise Divergenz kann mit einem Erfahrungs- und Sollwert verglichen werden, wobei bei einem Überschreiten der Soll-Differenz durch eine gemessene Ist-Differenz ein Warnsignal ausgegeben werden kann, um auf einen unzulässigen Verschleiß der Kupplungsverbindung hinzuweisen. Wie in DE 20 2004 020 347 U1 beschrieben, besteht stets das Risiko, dass einer der Winkelpositions-Sensoren nicht ordnungsgemäß arbeitet. In diesem Fall kann keine zuverlässige Aussage über das Drehspiel oder andere mögliche Fehlfunktionen des pneumatischen Schwenkantriebs getroffen werden. Die Verlässlichkeit des Systems ist aufgrund der Verwendung einer Vielzahl von Komponenten (einer Interpretier- und/oder Auswerte-Einrichtung, einer Vergleichseinrichtung und zweier Wege-Sensoren) begrenzt, da jede einzelne Komponente eine potentielle Fehlerquelle darstellt, bei deren individuellem Ausfall die gesamte Diagnose-Sensorik ausfällt. Besonders bei sicherheitskritischen Anwendungen, beispielsweise in Kernkraftwerken, stellt dies ein Sicherheitsrisiko dar. Beim Ausfall von nur einer Komponente muss das betroffene Stellorgan außer Betrieb genommen und in Stand gesetzt werden, wodurch der mit dem Stellorgan gesteuerte Prozess gestört wird.

US 4,856,327 A betrifft ein dynamisches Lastmesssystem und ein Verfahren und eine Vorrichtung zum Überwachen und Messen einer variablen Schublast auf den Ventilschaft eines Ventilaktors.

EP 2 423 547 A2 betrifft ein Abschlussventil.

US 5,594,175 A bezieht sich auf das Gebiet der online-Überwachung und -Diagnose von motorgetriebenen Ventilen.

DE 10 2012 111883 A1 betrifft ein Verfahren zur technischen Zustandsprüfung von drehantreibbaren Armaturen, wobei das gemessene Drehmoment mit einem Referenzwert verglichen wird.

Es ist eine Aufgabe der Erfindung, die Nachteile des Standes der Technik zu überwinden, insbesondere ein Diagnoseverfahren für eine Stellgerät- und/oder Stellgerät mit einer Diagnosevorrichtung bereit zu stellen, mit dem sich eine verlässliche Aussage über das Drehspiel an der Drehmomentkupplung treffen lässt, wobei vorzugsweise die Komplexität des Diagnoseverfahrens beziehungsweise des Stellgeräts reduziert ist und/oder wobei vorzugsweise unabhängig von dem Vorhandensein und dem Zustand eines Weg-Sensors eine Aussage über das Drehspiel getroffen werden kann. Diese Aufgabe ist gelöst durch die Gegenstände der unabhängigen Ansprüche.

Demnach ist ein Diagnoseverfahren für ein Stellgerät einer prozesstechnischen Anlage, wie einem Kraftwerk, beispielsweise einem Nuklearkraftwerk, einer chemischen Anlage, beispielsweise einer petrochemischen Anlage, einer lebensmittelverarbeitenden Anlage oder dergleichen vorgesehen. Das erfindungsgemäße Diagnoseverfahren ist vorgesehen für ein Stellgerät, das einen Stellantrieb mit einer Antriebswelle und einer Stellarmatur mit einer Stellwelle umfasst, wobei die Antriebswelle und die Stellwelle drehfest miteinander verbunden sind. Die drehfeste Verbindung der Antriebswelle mit der Stellwelle kann durch eine lösbare Kupplung mittels einer Kupplungsschnittstelle realisiert sein. Die drehfeste Verbindung kann insbesondere durch eine formschlüssige Drehmomentkupplung realisiert sein. Der Stellantrieb des Stellgeräts kann beispielsweise pneumatisch oder elektrisch sein. Als Stellarmatur kommt insbesondere ein Stellventil in Betracht. Ein Stellventil kann beispielsweise ein drehbares Ventilglied umfassen, das in einem Ventilkanal angeordnet ist, um den Durchfluss eines Prozessfluids der prozesstechnischen Anlage zuzulasssen oder zu verhindern. Zu diesem Zweck kann das Stellventil beispielsweise als Auf-/ Zu-Ventil ausgelegt und betrieben sein. Es ist auch denkbar, dass das Stellventil unterschiedliche Stellungen zwischen einer vollständig geöffneten und einer vollständig geschlossenen Stellung aufnimmt, in der, abhängig von der Stellung des Stellventils, dem Prozessfluid ein Strömungswiderstand entgegengestellt wird. Ein Stellventil kann beispielsweise einen Stellbereich von 360° oder weniger aufweisen. Ein Stellbereich von 180° oder weniger beziehungsweise 90° oder weniger kann bevorzugt sein. Beispielsweise kann ein Stellgerät an einer ersten (Auf-Stellung) einen Durchströmungsquerschnitt vollständig freigeben und in einer zweiten (Zu-Stellung), die gegenüber der ersten (Auf-Stellung) um vorzugsweise 90° verdreht ist, den Durchströmungsquerschnitt des Stellventils vollständig verschließen. Ein derartiges Stellventil kann beispielsweise als sogenanntes Schmetterlingsventil realisiert sein.

Die drehfeste Verbindung zwischen der Antriebswelle und der Stellwelle kann lösbar, unlösbar, schaltbar oder nicht-schaltbar sein. Insbesondere kann die Verbindung als Klauenkupplung realisiert sein. Eine Klauenkupplung kann beispielsweise durch formkomplementäre, kronenartige Wellenenden der Stellwelle und der Antriebswelle realisiert sein, die zur Übertragung von Drehmomenten und/oder Drehkräften ineinander greifen. Andere Drehverbindungen sind denkbar, beispielsweise eine Schmidt-Kupplung, eine Oldham-Kupplung, ein Kreuzgelenk, ein Kugel-Gleichlaufgelenk, eine Bogenzahnkupplung oder dergleichen. Es ist denkbar, dass die Drehverbindung durch eine schaltbare Klauenkupplung oder eine schaltbare Zahn-Kupplung realisiert ist. Die Drehverbindung ist dafür ausgelegt, rotatorische Stellbewegungen und/oder Stellkräfte von der Antriebswelle auf die Stellwelle zu übertragen. Die Drehverbindung zwischen der Stellwelle und der Antriebswelle wird vorzugsweise ohne Übersetzungs- oder Untersetzungs-Verhältnis ausgeführt (d.h. Drehbewegung beziehungsweise Drehkraft wird durch die Drehverbindung im Verhältnis 1:1 von der Antriebswelle zur Stellwelle übertragen).

Gemäß dem erfindungsgemäßen Diagnoseverfahren wird während einer Bewegung der Antriebswelle ein erstes Messsignal erfasst, beispielsweise ein sich auf die Drehbewegung der Antriebswelle beziehendes Wegmesssignal. Gemäß dem erfindungsgemäßen Diagnoseverfahren wird dieses erste Messsignal oder eine Ableitung des ersten Messsignals hinsichtlich einer sprungartigen Änderung ausgewertet, um ein Drehspiel zu erkennen. Die Erfinder haben herausgefunden, dass sich anhand einer sprungartigen Änderung von Sensor-Messwersten das Drehspiel des Stellgeräts insbesondere an einer Drehverbindung einer Antriebswelle und Stellwelle, beispielsweise einer lösbaren Kupplungsschnittstelle und/oder einer formschlüssigen Drehmomentkupplung, wie eine Klauenkupplung, verlässlich und präzise erkennen lässt.

Gemäß einer Ausführung ist das erste Messsignal ein Druck-Messsignal bezüglich insbesondere eines pneumatischen oder hydraulischen Antriebsdrucks oder ein Druck-Messsignal bezüglich eines Stelldrucks insbesondere an der Stellarmatur. Ein Druck-Messsignal kann sich beispielsweise auf den Antriebsdruck in einer Antriebskammer eines pneumatischen oder hydraulischen Stellantriebs beziehen. Ein solcher Stellantrieb kann beispielsweise einfach wirkend ausgestaltet sein, also eine pneumatische Arbeitskammer, und eine entgegengerichtete Rückstellfeder aufweisen. Es ist auch denkbar, dass der Stellantrieb zwei entgegengesetzt wirkende Arbeitskammern aufweist, ein solcher Stellantrieb kann als doppelt wirkender pneumatischer oder hydraulischer Stellantrieb bezeichnet werden. Insbesondere bei einem doppelt wirkenden Stellantrieb kann sich das Druck-Messsignal auf eine Druckdifferenz zwischen den Arbeitskammern beziehen. Im Allgemeinen kann ein Druck-Messsignal sich auf die Druckdifferenz des pneumatischen oder hydraulischen Antriebsdrucks in einer Arbeitskammer des Stellantriebs und einem Referenzdruck, insbesondere dem Atmosphärendruck, beziehen. Das Druck-Messsignal kann sich auf eine Druckdifferenz am Stellglied, beispielsweise dem Ventilglied, beziehen, insbesondere auf eine Druckdifferenz in dem Prozessfluid stromaufwärts und stromabwärts des Stellglieds. Ein solche Ausführung des erfindungsgemäßen Diagnoseverfahrens erlaubt es auch ohne eine Weg- oder Geschwindigkeits-Messung an Antriebswelle oder Stellwelle ein Drehspiel zwischen den beiden Wellen qualitativ zu erkennen, auf Basis eines Druck-Messsignals, welches zum Beispiel bei einem pneumatischen oder hydraulisch betätigten Stellantrieb ohnehin oftmals gemessen wird. Auf eine zusätzliche Weg-Sensorik kann dann verzichtet werden.

Gemäß einer anderen Ausführung der Erfindung kann das erste Messsignal ein Stellungs-Messsignal oder ein Geschwindigkeits-Messsignal sein. Das Stellungs-Messsignal oder Geschwindigkeits-Messsignal kann sich auf eine Relativ-Stellung beziehungsweise Relativ-Geschwindigkeit der Antriebswelle bezüglich eines ortsfesten Differenzpunktes beziehen. Das Stellungs-Messsignal oder Geschwindigkeits-Messsignal kann sich auf eine Relativ-Stellung oder Relativ-Geschwindigkeit der Stellwelle bezüglich einer ortsfesten Referenzstelle beziehen. Speziell im Vergleich zu dem pneumatischen Schwenkantrieb gemäß DE 20 2004 020 347 U1 genügt gemäß dieser Ausführung der Erfindung die Verwendung nur einer Stellungs- beziehungsweise Geschwindigkeitssensor, welcher sich entweder auf die Antriebswelle oder auf die Stellwelle beziehen kann, um das Drehspiel zwischen Antriebswelle und Stellwelle zu erkennen. Der jeweilige andere Sensor und die Vergleichseinrichtung, welche im Stand der Technik notwendig ist, kann gemäß dem erfindungsgemäßen Diagnoseverfahren verzichtet werden.

Gemäß einer weiteren alternativen Ausführung eines erfindungsgemäßen Diagnoseverfahrens ist das erste Messsignal ein Kraft-Messsignal, ein Drehmoment-Messsignal oder ein Beschleunigungs-Messsignal. Falls zwischen der Antriebswelle und der Stellwelle ein Drehspiel vorhanden ist, wird bei einer Initialbetätigung des Stellantriebs zunächst ausschließlich die Antriebswelle betätigt, und erst nach Überwindung des Drehspiels zusätzlich auch die Stellwelle mit dem daran befestigten Stellglied, sodass in dem Moment, in dem das Drehspiel überwunden ist, ein merklicher, sprungartiger Anstieg der Stell-Kraft beziehungsweise des Stell-Drehmoments eintritt, um die zusätzlichen auf die Stellwelle wirkenden Widerstände zu überwinden. Ein sich auf die Stellwelle beziehender Sensor erfasst hingegen so lange keine Stell-Kraft beziehungsweise keinen Stell-Drehmoment, solange nicht die Antriebswelle das Drehspiel überwunden hat und in einem Wirkeingriff mit der Stellwelle getreten ist. Ab diesem Zeitpunkt steigt die der Stellwelle bereitgestellte Stell-Kraft beziehungsweise das Stell-Drehmoment sprungartig an. Die Antriebswelle wird beim in Kontakt kommen mit der Stellwelle zunächst gebremst, sodass ein Beschleunigungssensor eine negative Beschleunigung feststellen kann. Die Stellwelle wird nach der Überwindung des Drehspiels durch die Antriebswelle plötzlich beschleunigt. Die Verwendung eines Kraft-, Drehmoment- oder Beschleunigungs-Messsignals kann insbesondere dann von Vorteil sein, wenn ein Stellgerät beispielsweise zum Überlastschutz ohnehin mit einem Kraft-Drehmoment und/oder Beschleunigungssensor ausgestattet ist.

Gemäß einer weiteren Alternative eines erfindungsgemäßen Diagnoseverfahrens kann das Messsignal ein optisches oder akustisches Messsignal sein.

Ein akustischer Sensor kann beispielsweise ein akustisches Messsignal beziehungsweise das Aufeinanderprallen erfassen, wenn eine antriebswellenseitige Kontaktfläche und eine stellwellenseitige Kontaktflächenkupplungsschnittstelle beispielsweise einer Klauenkupplung nach Überwindung eines Drehspiels miteinander in Berührkontakt treten. Der mit dem Drehspiel einhergehende Spalt beziehungsweise dessen Auftreten/Verschwinden kann auch optisch erfasst werden. Mit einer derartigen Messung, die direkt das Vorhandensein beziehungsweise das Verschwinden eines Drehspiels erfasst, kann besonders verlässlich ein Drehspiel erkannt werden.

Gemäß einer Ausführung eines erfindungsgemäßen Diagnoseverfahrens, die mit den vorherigen kombinierbar ist, kann das erste Messsignal mit einem auf die Antriebswelle gerichteten Sensor oder mit einem auf die Stellwelle gerichteten Sensor erfasst werden. Wie oben dargelegt, kann ein auf die Antriebswelle gerichteter Sensor im Moment der Überwindung des Drehspiels direkt oder indirekt den sprungartigen Anstieg des entgegen dem Stellantrieb wirkenden Widerstands durch die Stellwelle erfassen. Ein auf die Stellwelle gerichteter Sensor kann das Überwinden des Drehspiels erfassen und die ab diesem Moment beginnende Beeinflussung der Stellwelle durch den Stellantrieb. Alternativ ist eine Ausführung eines erfindungsgemäßen Diagnoseverfahrens denkbar, bei dem das Messsignal von einem auf die drehfeste Verbindung, insbesondere die Drehmomentkupplung, gerichteten Sensor erfasst.

Gemäß einer Ausführung eines erfindungsgemäßen Diagnoseverfahrens, die mit den vorherigen kombinierbar ist, wird während der Bewegung der Antriebswelle die Zeit, ein Soll-Stellsignal, ein elektrisches Steuersignal und/oder ein (anderes) zweites Messsignal erfasst, welches sich auf eine andere physikalische Größe als das erste Messsignal bezieht. Bei dieser Ausführung eines Diagnoseverfahrens kann beispielsweise zur Erhöhung der Präzision und Zuverlässigkeit ein zweites Messsignal, ein drittes Messsignal und/oder ein viertes Messsignal betreffend unterschiedliche physikalische Größen, wie Weg, Kraft, Antriebsdruck oder dergleichen berücksichtigt werden, um eine besonders genaue Erfassung des Drehspiels zu gewährleisten. Im Unterschied zu DE 20 2004 020 347 U1 umfasst das Diagnoseverfahren zum Erkennen eines Drehspieles vorzugsweise nicht, dass zwei auf dieselbe physikalische Größe, beispielsweise den Weg oder die Geschwindigkeit, bezogene Messgröße erfasst und miteinander verglichen werden.

Gemäß einer speziellen Ausführung eines erfindungsgemäßen Diagnoseverfahrens, die mit den vorherigen kombinierbar ist, wird die Ableitung des ersten Messsignals auf die Zeit oder eine andere beispielsweise als zweites Messsignal erfasste physikalische Größe bezogen. Es ist auch denkbar, die Ableitung des zweiten, dritten oder weiteren Messsignals auf eine wiederum andere physikalische Größe oder auf die Zeit zu beziehen. Beispielsweise kann das erste Messsignal ein Stellungs-Messsignal sein, dessen erste Ableitung nach der Zeit ein Geschwindigkeitssignal ist und dessen zweite Ableitung nach der Zeit ein Beschleunigungssignal ist. Falls sich ein solches Stellungs-Messsignal auf die Stellung der Antriebswelle bezieht, kann in dem Moment, in dem ein Drehspiel zwischen Antriebswelle und Stellwelle überwunden ist, dieses Drehspiel erkannt werden anhand eines möglicherweise kurzzeitigen Verharrens in einer Stellung, anhand eines Geschwindigkeits-Abfalls und/oder anhand einer impulsartigen Abbremsung beziehungsweise negativen Beschleunigung. Es ist auch denkbar, dass die erste Messgröße ein Antriebs-Druck-Messsignal und die zweite Messgröße ein Antriebswellen-Stellungs-Signal ist, auf deren Basis eine Ableitung des Antriebs-Drucks nach der Stellposition bestimmt werden kann, wobei bei einem stellungsabhängig rapide ansteigendem Druck darauf geschlossen werden kann, dass ein Drehspiel überwunden wurde.

Gemäß einer weiteren Ausführung eines Diagnoseverfahrens, die mit den vorherigen kombinierbar ist, wird zum Bestimmen der Amplitude des Drehspiels das erste, gegebenenfalls das zweite und/oder ein weiteres Messsignal berücksichtigt, welches ein Stellungs-Messsignal, ein Geschwindigkeits-Messsignal oder ein Beschleunigungs-Messsignal sein kann, das insbesondere mit einem auf die Antriebswelle gerichteten Sensor oder mit einem auf die Stellwelle gerichteten Sensor erfasst werden kann. Anhand eines Stellungs-Messsignals lässt sich unter Berücksichtigung einer zuvor erfolgten Erkennung des Drehspiels, insbesondere des Beginns beziehungsweise des Endes des Drehspiels, direkt aus den Stellungs-Messwerten bei Beginn und bei Ende des Drehspiels die Drehspiel-Amplitude berechnen. Falls als Sensor ein Geschwindigkeits- und/oder Beschleunigungssensor verwendet wird, kann mithilfe eines Zeitintegrals der Geschwindigkeit oder eines zweifachen Zeitintegrals der Beschleunigung ebenfalls eine Stellweg-Amplitude des Drehspiels bestimmt werden. Bei einer Bewegung der Antriebswelle und der Stellwelle von einer ersten Endstellung zu einer zweiten Endstellung und gegebenenfalls zurück lässt sich anhand einer infolge des Drehspieles auftretenden Hysterese des erfassten ersten, zweiten und/oder weiteren Messsignals die Amplitude des Drehspiels bestimmen.

Gemäß einer Ausführung eines Diagnoseverfahrens, die mit den vorherigen kombinierbar ist, wird bei Überschreiten eines vorgegebenen Schwellenwertes durch das erste oder das zweite Messsignal und/oder eine ermittelte Drehspiel-Amplitude ein Warnsignal erzeugt. Beispielsweise kann ein Schwellenwert derart definiert werden, dass einem Benutzer mitgeteilt wird, wenn das Diagnoseverfahren ermittelt hat, dass das Stellgerät ein Drehspiel aufweist, welches zwar noch einen sicheren Betrieb zulässt, sich jedoch einer kritischen Größe annähert. Insbesondere kann ein Schwellenwert dergestalt definiert sein, dass bei Erreichen einer kritischen Größe ein dargestelltes Warnsignal erzeugt wird.

Gemäß einer Ausführung eines erfindungsgemäßen Diagnoseverfahrens, die mit den vorherigen kombinierbar ist, umfasst das Verfahren ferner einen Hubtest, wie einen Teilhubtest oder einen Vollhubtest. Die vorherige Erkennung sowie gegebenenfalls Amplitudenbestimmung des Drehspiels zwischen Antriebswelle und Stellwelle kann vorzugsweise dazu verwendet werden, die Amplitude eine Teilhubtestes zu definieren, um eine valide Aussage treffen zu können, oder um sicherzustellen, dass bei einer vorgegebenen Teilhubtest-Amplitude keine signifikante Verfälschung des Diagnoseergebnisses durch ein eventuell vorhandenes Drehspiel vorliegt.

Die Erfindung betrifft auch ein Stellgerät für eine prozesstechnische Anlage, wie eine chemische Anlage, beispielsweise eine petrochemische Anlage, eine Lebensmittel verarbeitende Anlage, beispielsweise eine Brauerei, ein Kraftwerk, beispielsweise ein Kernkraftwerk, oder dergleichen. Das Stellgerät umfasst einen Stellantrieb insbesondere einen pneumatischen oder elektrischen Stellantrieb, mit einer Antriebswelle sowie eine Stellarmatur, wie ein Stellventil, mit einer Stellwelle. Das Stellgerät umfasst ferner eine drehfeste Verbindung, insbesondere eine formschlüssige Drehmomentkupplung, wie eine Klauenkupplung, die die Antriebswelle und die Stellwelle miteinander verbindet. Das Stellgerät umfasst außerdem eine Diagnosevorrichtung, die einen ersten Sensor sowie eine Diagnoseelektronik aufweist, welche mit dem ersten Sensor verbunden ist, um ein erstes Messsignal von dem ersten Sensor zu empfangen. Die Diagnoseelektronik der Diagnosevorrichtung ist dazu eingerichtet, dass erste Messsignal oder eine Ableitung des ersten Messsignals hinsichtlich einer sprungartigen Änderung auszuwerten, um ein Drehspiel zu erkennen. Die Erkennung betrifft das Drehspiel zwischen der Antriebswelle und der Stellwelle, insbesondere in der drehfesten Verbindung, beispielsweise der Klauenkupplung. Der erste Sensor kann beispielsweise ein Drucksensor sein, insbesondere ein Drucksensor, der auf einen pneumatischen oder hydraulischen Stellantrieb bezogen ist, um beispielsweise den Stelldruck oder eine Stelldruckdifferenz zu erfassen. Der erste Sensor kann ein Stellungssensor sein, der die Stellung der Antriebswelle erfasst. Es ist auch denkbar, dass der erste Sensor ein Geschwindigkeitssensor, ein Kraftsensor, ein Drehmomentsensor, ein Beschleunigungs-Sensor oder dergleichen ist. Beispielsweise kann der erste Sensor ein optischer oder ein akustischer Sensor sein. Es ist auch denkbar, dass der erste Sensor ein elektrischer Sensor, ein magnetischer Sensor, ein elektro-magnetischer Sensor, oder dergleichen ist.

Gemäß einer Ausführung eines Stellgerätes ist der erste Sensor auf die Antriebswelle, auf die Stellwelle oder auf die drehfeste Verbindung, insbesondere die Drehmomentkupplung gerichtet.

Gemäß einer Ausführung eines erfindungsgemäßen Stellgerätes umfasst die Diagnosevorrichtung ferner wenigstens einen zweiten, dritten und vierten und/oder weiteren mit der Diagnoseelektronik verbundenen Sensor, der eine andere physikalische Größe als der zuvor genannte erste Sensor misst. Der zweite mit der Diagnoseelektronik verbundene Sensor (oder weitere) kann beispielsweise ein Stellungssensor oder ein Geschwindigkeitssensor sein. Bevorzugt ist der zweite oder andere weitere Sensor zur Übermittlung des zweiten oder anderen weiteren Messsignals mit der Diagnoseelektronik verbunden.

Gemäß einer Ausführung eines erfindungsgemäßen Stellgerätes, die mit den vorherigen kombinierbar ist, umfasst die Diagnosevorrichtung ferner eine mit der Diagnoseelektronik verbundene Einrichtung zum Erfassen eines Soll-Stellsignals oder eines elektrischen Steuersignals. Ein Soll-Stellsignal kann beispielsweise ein von einer Leitwarte vorgegebenes Signal bezüglich einer Soll-Stellung des Stellgliedes der Stellarmatur sein. Üblicherweise ist ein Stellglied drehfest mit der Stellwelle verbunden. Ein Soll-Stellsignal kann beispielsweise ein Soll-Stellwinkel sein oder eine Soll-Stellposition, wie eine Auf-Stellung oder eine Zu-Stellung. Ein elektrisches Steuersignal kann beispielsweise das an dem Stellgerät von einer Leitwarte oder einer zentralen Steuerstelle empfangenes elektrisches Steuersignal sein, welches eine Steuerungsvorgabe an das Stellgerät übergibt.

Gemäß einer Ausführung eines erfindungsgemäßen Stellgerätes, die mit den vorherigen kombinierbar ist, ist die Diagnoseelektronik dazu eingerichtet, die Ableitung des ersten Messsignals (sowie gegebenenfalls eines zweiten und dritten und/oder eines weiteren Messsignals) bezüglich der anderen physikalischen Größe oder der Zeit zu bestimmen. Beispielsweise kann die Diagnoseelektronik einen ersten Sensor zum Erfassen eines ersten Messsignals bezogen auf den Antriebsdruck eines pneumatischen Stellantriebs aufweisen und einen zweiten Sensor, der ein zweites Messsignal bezüglich einer Stellposition der Antriebswelle erfasst, und die Diagnoseelektronik kann dazu eingerichtet sein, eine Ableitung des Drucksignals von dem ersten Sensor bezüglich des mit dem zweiten Sensor erfassten Stellweges zu bestimmen. Die Diagnoseelektronik kann eine Zeitbestimmungseinrichtung wie einen Timer umfassen. Es ist auch denkbar, dass die Diagnosevorrichtung dazu eingerichtet ist, in gewissen vorgegebenen Intervallen beispielsweise gemäß einer Taktung die Messwerte abzufragen und/oder zu speichern, wobei eine solche Taktung eine Zeiteinheit definieren kann. Die Diagnoseelektronik kann dazu eingerichtet sein, die Ableitung des ersten Messsignals bezüglich der Zeit zu bestimmen, wobei eine Zeit-Ableitung des ersten Messsignals gemäß gemessener Zeitwerte beziehungsweise Zeitpunkte oder entsprechend vorgegebener Zeiteinheiten erfolgen kann.

Gemäß einer Ausführung eines erfindungsgemäßen Stellgerätes, die mit den vorherigen kombinierbar ist, umfasst die Diagnosevorrichtung einen Stellungssensor, einen Geschwindigkeitssensor und/oder einen Beschleunigungssensor, welcher insbesondere auf die Stellwelle oder auf die Antriebswelle gerichtet ist. Die Diagnoseelektronik kann dazu eingerichtet sein, das Messsignal dieses Sensors, also des Stellungssensors, des Geschwindigkeitssensors und/oder des Beschleunigungssensors, zu empfangen und zur Bestimmung der Amplitude des Drehspiels zu berücksichtigen. Eine quantitative Bestimmung der Amplitude des Drehspiels erlaubt für sich genommen bereits eine verlässliche Aussage über Abnutzungserscheinungen an dem Stellgerät, insbesondere dessen drehfester Verbindung, beispielsweise einer Klauenkupplung, und kann die Verlässlichkeit weiterer Tests, beispielsweise eines Partial-Stroke-Tests und/oder eines Full-Stroke-Tests verbessern.

Das erfindungsgemäße Stellgerät ist vorzugsweise zur Durchführung eines erfindungsgemäßen Diagnoseverfahrens ausgestaltet. Vorzugsweise wird das erfindungsgemäße Diagnoseverfahren mit einem erfindungsgemäßen Stellgerät durchgeführt und/oder bedient sich der Komponenten eines erfindungsgemäßen Stellgerätes. Das erfindungsgemäße Diagnoseverfahren kann gemäß der Funktionalität eines erfindungsgemäßen Stellgeräts funktionieren.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen
- Fig. 1:: eine schematische Darstellung eines erfindungsgemäßen Stellgerätes;
- Fig. 2:: ein Antriebsdruck/Hub-Diagramm bezüglich der Antriebsbeziehungsweise Stellstange; und
- Fig. 3:: ein Zeit-Diagramm des Soll-Hubes und verschiedene Messwerte eines erfindungsgemäßen Stellgerätes.

Die Idee des erfindungsgemäßen Diagnoseverfahrens besteht darin, dass bei einer Drehverbindung zwischen einer Antriebswelle und einer Stellwelle, exemplarisch einer Klauenkupplung, im Falle des Vorhandenseins eines Drehspiels, ausgehend von einem Ruhezustand, beispielsweise einem Schließzustand des Stellventils, bei einer anfänglichen Bewegung der Antriebswelle entgegengesetzt zu seiner vorherigen Antriebsbewegung zum Stellen des Stellglieds beispielsweise in die Endstellung, die antriebswellenseitige Klaue zunächst das Drehspiel überwinden muss, bevor wieder ein Berührkontakt der antriebsseitigen Klaue und der abtriebsseitigen beziehungsweise stellwellenseitigen Klaue hergestellt ist. Während die Antriebswelle das Drehspiel überwindet, muss der Stellantrieb lediglich solche Reibwiderstände etc. überwinden, welche unmittelbar auf die Antriebswelle wirken. Erst ab dem Moment, in dem die antriebswellenseitige Klaue mit der stellwellenseitigen Klaue in Berührkontakt eintritt, arbeitet der Stellantrieb (auch) gegen die auf die Stellwelle wirkenden Widerstände, beispielsweise Reibung an Dichtungen sowie Reibung beziehungsweise Setzung an dem Ventilglied. Im Moment des Eintretens in den Berührkontakt steigt der Widerstand, den der Stellantrieb überwinden muss, merklich an, was sich in einer sprungartigen Änderung beispielsweise der Drehgeschwindigkeit, nämlich einer sprungartigen Verlangsamung, bemerkbar macht. Falls der Stellantrieb pneumatisch betätigt ist, erfordert die Erhöhung der Antriebsleistung zum Betätigen von sowohl Antriebswelle als auch Stellwelle eine merkliche Erhöhung des pneumatischen Antriebdruckes.

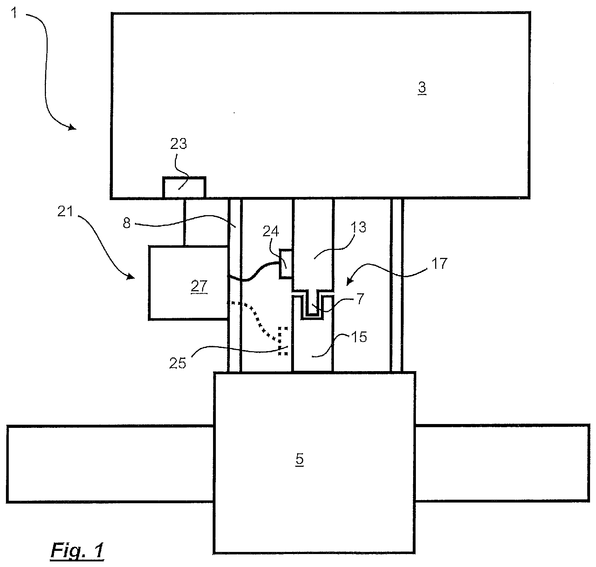

Fig. 1 zeigt exemplarisch ein erfindungsgemäßes Stellgerät, das im Allgemeinen mit der Bezugsziffer 1 versehen ist. Als Hauptbestandteile umfasst das Stellgerät 1 einen Stellantrieb 3, der mit einer Antriebswelle 13 zum Abgeben der Antriebsleistung ausgestattet ist, eine Stellarmatur 5, die über eine Stellwelle 15 verfügt, mittels welcher sie die Antriebsleistung von dem Stellantrieb 3 empfangen kann, sowie eine drehfeste Verbindung 17 zum Übertragen der Antriebsleistung von der Antriebswelle 13 auf die Stellwelle 15. Beispielsweise ist der Stellantrieb 3 als pneumatisch einfach- oder doppeltwirkender Stellantrieb ausgestaltet. Die Stellarmatur 5 kann ein Stellventil nach Schmetterlings-Ventil-Bauart sein. Die Antriebswelle 13 und die Stellwelle 15 können mittels einer Klauenkupplung 7 miteinander verbunden sein.

Das erfindungsgemäße Stellgerät 1 umfasst eine Diagnosevorrichtung 21 mit einer Diagnoseelektronik 27 und wenigstens einem ersten Sensor. Die Diagnosevorrichtung 21 kann außer dem ersten Sensor einen zweiten, dritten, vierten oder weitere Sensoren umfassen.

Die Diagnosevorrichtung 21, welche in Fig. 1 dargestellt ist, verfügt beispielsweise über einen Stellantrieb-Druck-Sensor 23, zum Erfassen des pneumatischen Antriebsdruckes in einer Arbeitskammer des Stellantriebes 3. Die Diagnosevorrichtung 21 gemäß Fig. 1 verfügt ferner über einen Weg-Sensor beziehungsweise Stellungssensor 24 bezogen auf die Antriebswelle 13, welche eine Stellung beziehungsweise einen Weg der Antriebswelle 13 bezüglich eines ortsfesten Referenzpunktes erfasst. Ein solcher Referenzpunkt kann beispielsweise vorgebeben sein durch den Stellantrieb 3 und/oder die Stellarmatur 5 und/oder ein Gehäuse beziehungsweise Joch 8 oder ähnliches, welches fest mit dem Stellantrieb 3 und der Stellarmatur 5 verbunden ist. Die Diagnosevorrichtung 21 kann auch über einen weiteren Sensor 25 an der Stellwelle 15 verfügen, beispielsweise ein Geschwindigkeits- oder Beschleunigungssensor.

Bei einem erfindungsgemäßen Stellgerät 1 umfasst die Diagnosevorrichtung 21 wenigstens einen stellgerätebezogenen Sensor. Der stellgerätebezogene Sensor erfasst eine Messgröße, die auf die Antriebswelle, die Stellwelle oder die drehfeste Verbindung 17 bezogen sein kann, beispielsweise ein Stellweg, eine Größe, die auf den Stellantrieb 3 oder die Stellarmatur 5 bezogen sein kann, beispielsweise ein Druck-Messwert, oder einen im Allgemeinen auf die Stellarmatur 1 bezogenen Messwert, beispielsweise eine akustische Messung.

Alternativ oder zusätzlich kann ein Stellgerät 1 oder dessen Diagnosevorrichtung über andere oder weitere Sensoren verfügen. Weitere Sensoren können sich beispielsweise auf die Antriebswelle 13, die Stellwelle 15 oder die drehfeste Verbindung 17 beziehen (nicht dargestellt). Es ist auch denkbar, dass eine Diagnosevorrichtung keinen auf die Antriebswelle 13 bezogenen Sensor 24 und/oder keinen Stellantriebs-Drucksensor 23 sondern nur einen beispielsweise auf die Stellwelle 15 bezogenen anderen Sensor 25, wie ein Weg-, Beschleunigungs-, oder Geschwindigkeitssensor, aufweist.

Die Diagnosevorrichtung 21 kann beispielsweise über Sensorik für ein Druck-Messsignal, beispielsweise eines hydraulischen oder pneumatischen Antriebsdruckes, oder ein Druck-Signal bezüglich eines Stelldrucks beispielsweise an der Stellarmatur verfügen. Die Diagnosevorrichtung 21 kann beispielsweise eine Sensorik für ein Geschwindigkeits-Messsignal, ein Kraft-Messsignal, ein Drehmoment- oder ein Beschleunigungs-messsignal aufweisen. Die Diagnosevorrichtung 21 kann verbunden sein mit einem optischen Sensor oder einem akustischen Sensor zur Erfassung eines optischen beziehungsweise akustischen Messsignals. Die Sensorik kann elektromechanisch sein, um ein elektromechanisches Messsignal für die Diagnosevorrichtung 21 bereitzustellen.

Der Sensor oder die Sensoren der Diagnosevorrichtung 21 sind signalübertragungsgemäß mit der Diagnoseelektronik 27 verbunden. Die Diagnosevorrichtung 21 kann eine Zeit-Messvorrichtung und/oder einen Zeitgeber aufweisen. Beispielsweise kann die Diagnoseelektronik 27 mit einem Timer ausgestattet sein.

Die Diagnosevorrichtung 21 oder deren Diagnoseelektronik 27 kann ferner mit einem oder mehreren Signaleingängen zum Erfassen beispielsweise eines Soll-Stellsignals xₛₒₗₗ oder eines elektrischen Steuersignals ausgestellt sein. Beispielsweise kann das Stellgerät mit einem Strom-Druck-Wandler (i/p-Wandler) für die Druckluftversorgung des pneumatischen Antriebs ausgestattet sein und die Diagnoseelektronik 27 kann das elektrische Steuersignal beziehungsweise das Soll-Stellsignal, welches dem elektropneumatischen Wandel vorgegeben wird, empfangen. Die Diagnoseelektronik 27 kann Teil einer Stellungsreglerelektronik sein.

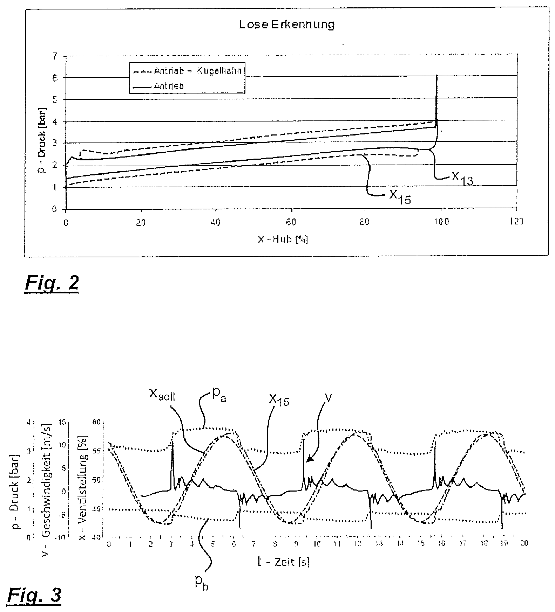

Fig. 2 zeigt ein schematisches Antriebsdruck/Hub-Diagramm, wobei für einen sogenannten Full-Stroke-Test die Hub-Stellung x₁₃ der Antriebswelle 13 ohne Drehspiel und die Hub-Stellung x₁₅ der Stellwelle 15 mit Drehspiel in Prozent des Gesamt-Stellweges gegenüber dem Antriebsdruck pₐ abgetragen ist.

Bei dem Full-Stroke-Test wird der vollständige Bewegungsbereich des Stellglieds (beispielsweise des Ventilglieds) einer Stellarmatur (beispielsweise eines Stellventils) von einer ersten Endstellung (beispielsweise einer vollständig geschlossenen Endstellung) bis zu einer zweiten Endstellung (beispielsweise einer vollständig geöffneten Endstellung), also 100 % des Stellweges, durchfahren. Der in Fig. 2 dargestellte Full-Stroke-Test kann zur Stellgeräteinitialisierung durchgeführt werden. Infolge eines Drehspiels in der drehfesten Verbindung 17 zwischen der Antriebswelle 13 und der Stellwelle 15 beginnt sich die Antriebswelle 13 zu bewegen, bevor eine Bewegung der Stellwelle 15 eintritt. Dies liegt daran, dass die Antriebswelle ausgehend von der ersten Endstellung zunächst den Bereich des Drehspieles durchfährt, in welchem noch kein kraftübertragender Berührkontakt zwischen der Antriebswelle 13 und der Stellwelle 15 realisiert ist. Erst nach vollständigem Durchfahren des Drehspiels gelangt die Antriebswelle 13 mit der Stellwelle 15 in kraftübertragenden Berührkontakt.

Beispielsweise kann als Berührkontakt einer drehfesten Verbindung 17 zwischen der Antriebswelle 13 und der Stellwelle 15, wie in Fig. 1 abgebildet, eine Klauenkupplung 7 vorgesehen sein, wobei eine gewisse Relativbewegung der stellantriebsseitigen Klaue relativ zu der stellgliedseitigen Klaue vorhanden ist. Es ist auch die Verwendung einer anderen Drehverbindung zwischen Antriebswelle 13 und Stellwelle 15 denkbar. Erst nachdem die Antriebswelle 13 das Drehspiel vollständig durchlaufen hat, nimmt die Antriebswelle 13 die Drehwelle 15 mit. Infolge der auf die Stellwelle 15 beziehungsweise das Stellglied der Stellarmatur 5 wirkenden Widerstände geht mit dem Berührkontakt von Antriebswelle 13 und Stellwelle 15 eine Notwendigkeit für eine entsprechend steigende Antriebskraft einher. Bei dem in Fig. 2 dargestellten Antriebsdruck/Hub-Diagramm ist an dieser Stelle eine plötzliche, rapide Änderung des Antriebsdrucks p bei gleichbleibender Hubstellung x₁₅ zu erkennen. Sowohl beim Anfahren aus der (beispielsweise geschlossenen) 0 %-Stellung findet hier exemplarisch bei einem Antriebswellenbewegung um etwa 5 % des Gesamt-Stellweges rapide Änderung des Drucks pₐ statt. Gleichermaßen findet beim Abfahren aus der (beispielsweise vollständig geöffneten) 100 %-Hubstellung erst nach einer anfänglichen Stellungsänderung der Antriebswelle 13 um etwa 5 % des Stellweges eine rapide Druckänderung statt.

Aus dem Diagramm gemäß Fig. 2 lässt sich durch die rapide Druckänderung bei Durchfahren der von der 5 %-Stellung (in ansteigender Richtung) und beim Durchfahren der 95 %-Stellung (in absteigender Richtung) eine sprungartige Antriebsdruck pₐ-Änderung ablesen. Daraus lässt sich gemäß dem erfindungsgemäßen Verfahren ablesen, dass zwischen der Antriebswelle 13 und der Stellwelle 15 ein Drehspiel vorhanden ist. Ferner lässt sich aus der sprungartigen Druck-Änderung bei etwa 5 % beziehungsweise 95 % des gesamten Stellweges die Information herleiten, dass das Drehspiel etwa 5 % des Gesamtstellweges beträgt.

Beispielsweise kann beim Initialisieren einer Stellarmatur 5, insbesondere eines Stellventils, eine Hub-Drucklinie gemäß Fig. 2 aufgenommen werden und als sogenannte Ventilsignatur in der Diagnoseelektronik, beispielsweise einem Speicher eines Stellungsreglers, hinterlegt werden. Gemäß diesem Beispiel kann die Kennlinie mittels eines Drehsensors 24 und eines Stellantriebs-Drucksensor 23 erfasst werden. Es ist auch denkbar, dass alternativ zu dem Stellantriebs-Drucksensor 23 ein elektrisches Steuersignal, wie ein zu dem Stelldruck proportionales Stromsignal, welches an einem i/p-Wandler anliegen kann, erfasst wird durch die Diagnoseelektronik 27. Die Drucksignatur kann beispielsweise gemäß der exemplarischen Darstellung von Fig. 2 bei einem langsamen Verfahren von 0 % Hubstellung zu 100 % Hubstellung aufgenommen werden, wobei die Hub-Stellung (in Prozent, Grad oder Millimeter) aufgezeichnet wird. Wird zu einem späteren Zeitpunkt während des Betriebes des Stellgerätes eine vergleichbare Messung (hier: ein Full-Stroke-Test) durchgeführt, wird anhand des sprungartigen Anstieges des Stellantriebs-Drucks p₁₃ bei gleichbleibender oder geringfügig sich ändernder Stellung x₁₅ (oder x₁₃) das Vorliegen eines Drehspieles erkannt. Falls das auf diese Weise erfasste Kupplungsspiel eine vordefinierte Schwelle erreicht, kann ein dahingehender Warnhinweis ausgegeben werden, dass Beispielsweise das Stellgerät 1 nicht mehr ausreichend oder präzise arbeitet oder ein Full-Stroke-Test (Vollhubtest) oder Partial-Stroke-Test (Teilhubtest) nur mit eingeschränkter Genauigkeit durchgeführt werden kann.

Das in Fig. 3 dargestellte Diagramm zeigt einen Zeit (t)-abhängigen Verlauf des Antriebsdrucks pₐ (gepunktete Linie) in einer ersten Antriebskammer und des Stelldrucks p_{b} (gepunktete Linie) in einer zweiten Antriebskammer eines doppel-wirkenden pneumatischen Stellantriebes. Fig. 3 zeigt ferner zeitabhängig den Verlauf eines Soll-Positions-Stellsignals (Soll-Hub) xₛₒₗₗ (strichlierte Linie) und eines Ist -Positions-Messsignals bezüglich der Stellwelle x₁₅ (Strich-Punkt-Linie). Ferner zeigt Fig. 3 den zeitabhängigen Verlauf der Stellgeschwindigkeit v (durchgezogene Linie) der Stellwelle 15. Der Verlauf des Soll-Stellungs-Stellsignals xₛₒₗₗ verläuft sinuskurvenartig mit einer Amplitude von ± 7,5 % des gesamten Stellbereiches um die 50 %-Ventilstellung. Dies kann als Soll-Stellungs-Stellsignal für einen sogenannten Partial-Stroke-Test um eine geöffnete Stellung betrachtet werden.

Eine Periode des Partial-Stroke-Tests liegt bei etwa 6,2 Sekunden. Sowohl in dem Verlauf der Ist-Messsignale für die Stellwellenstellung x₁₅, als auch bezüglich der Stellgeschwindigkeit v, sind sprungartige Änderungen bei etwa 3,1 Sekunden, etwa 6,2 Sekunden, 9,4 Sekunden, 12,6 Sekunden, 15,7 Sekunden und 19 Sekunden zu erkennen. Die Ist-Stellung der Stellwelle x₁₅ folgt zunächst der Soll-Stellung xₛₒₗₗ bis zu dem unteren beziehungsweise oberen Umkehrpunkt, wo die Ist-Stellung x₁₅ anschließend allerdings kurzzeitig verharrt, bevor eine ruckartige Änderung in die entgegengesetzte Richtung stattfindet, durch welche sich die Ist-Stellung x₁₅ wieder der Soll-Stellung xₛₒₗₗ angleicht. Mit den sprungartigen Stellungs-Änderungen des Stellwellen-Ist-Stellungs-Messsignals x₁₅ geht eine sprungartige Änderung der Stellstangengeschwindigkeit v einher, die dem Aufprall der Antriebswelle gegen die Stellwelle beziehungsweise der antriebsseitigen Kupplungsbestandteile gegen die stellwellenseitigen Kupplungsbestandteile geschuldet ist.

Der Stelldruck pₐ der ersten Arbeitskammer verläuft im Bereich des Druckanstieges (bei etwa 3,1 Sekunden, etwa 9,3 Sekunden und etwa 15,6 Sekunden) mit einer erkennbaren Druckspitze. Der Druckverlauf der zweiten pneumatischen Arbeitskammer p_{b} zeigt im Verlauf des ansteigenden Bereiches (bei etwa 6,3 Sekunden, etwa 12,6 Sekunden und etwa 19 Sekunden) ebenfalls eine Druckspitze.

Die in dem Fig. 3 dargestellten Diagramm ersichtlichen, sprungartigen Änderungen jeder einzelnen Kurve x₁₅, v, pₐ und p_{b} für sich genommen, weisen darauf hin, dass an dem Stellgerät, an dem die Messwerte erfasst wurden, ein Drehspiel zwischen der Antriebswelle 13 und der Stellwelle 15 vorhanden ist.

Anstelle der Wellenstellung oder Wellengeschwindigkeit kann beispielsweise auch eine ganz andere physikalische Messgröße erfasst werden, beispielsweise eine akustische Messung des Aufschlags der Antriebswelle 13 gegen die Stellwelle 15, um so das Überwinden des Drehspiels zu erkennen.

### Bezugszeichen

- 1: Stellgerät
- 3: Stellantrieb
- 5: Stellarmatur
- 7: Klauenkupplung
- 8: Joch
- 13: Antriebswelle
- 15: Stellwelle
- 17: drehfeste Verbindung
- 21: Diagnosevorrichtung
- 23: Stellantrieb-Druck-Sensor
- 24: Drehsensor/Stellungssensor
- 25: Sensor
- 27: Diagnoseelektronik
- p: Antriebsdruck
- t: Zeit
- v: Stellgeschwindigkeit
- xₛₒₗₗ: Soll-Position-Stellsignal (Soll-Hub)
- X₁₃: Hub-Stellung der Antriebswelle 13
- X₁₅: Hub-Stellung der Stellwelle 15

## Patentansprüche

1. Diagnoseverfahren für ein Stellgerät (1) einer prozesstechnischen Anlage, wie eine chemische Anlage, eine Lebensmittel verarbeitende Anlage oder dergleichen, das einen Stellantrieb (3) mit einer Antriebswelle (13) und eine Stellarmatur (5), umfassend ein Stellventil, mit einer Stellwelle (15) und einem drehbaren Ventilglied umfasst, wobei die Antriebswelle (13) und die Stellwelle (15) drehfest mit einander verbunden sind, wobei während einer Bewegung der Antriebswelle (13) ein erstes Messsignal erfasst wird, und wobei ein zeitlicher Verlauf des ersten Messsignals oder ein zeitlicher Verlauf einer Ableitung des ersten Messsignals hinsichtlich einer sprungartigen Änderung ausgewertet wird, um ein Drehspiel zwischen der Stellwelle (15) und der Antriebswelle (13) zu erkennen.

2. Diagnoseverfahren nach Anspruch 1, wobei das erste Messsignal ein Druck-Messsignal (pₐ, p_{b}) bezüglich eines pneumatischen oder hydraulischen Antriebsdrucks oder ein Druck-Messsignal bezüglich eines Stelldrucks ist.

3. Diagnoseverfahren nach Anspruch 1, wobei das erste Messsignal ein Stellungs-Messsignal (x₁₃, x₁₅) oder ein Geschwindigkeits-Messsignal (v), ein Kraft-, Drehmoment- oder Beschleunigungs-Messsignal, ein optisches oder akustisches Messsignal ist.

4. Diagnoseverfahren nach einem der Ansprüche 1 bis 3, wobei das erste Messsignal mit einem auf die Antriebswelle (13) gerichteten Sensor (24) oder mit einem auf die Stellwelle (15) gerichteten Sensor (25) erfasst wird.

5. Diagnoseverfahren nach einem der Ansprüche 1 bis 3, wobei das erste Messsignal von einem auf die drehfeste Verbindung (17) gerichteten Sensor erfasst wird.

6. Diagnoseverfahren nach einem der vorstehenden Ansprüche, wobei während der Bewegung der Antriebswelle (13) die Zeit (t), ein Soll-Stellsignal (xₛₒₗₗ), ein elektrisches Steuersignal und/oder ein zweites Messsignal erfasst wird, das sich auf eine andere physikalische Größe als das erste Messsignal bezieht.

7. Diagnoseverfahren nach einem der vorstehenden Ansprüche, wobei die Ableitung des ersten Messsignals bezogen auf die Zeit (t) oder die andere physikalische Größe bezogen wird.

8. Diagnoseverfahren nach einem der vorstehenden Ansprüche, wobei zum Bestimmen der Amplitude des Drehspiels das erste, gegebenenfalls das zweite oder ein weiteres Messsignal berücksichtigt wird, das ein Stellungs-Messsignal (x₁₃, x₁₅), ein Geschwindigkeits-Messsignal (v) oder ein Beschleunigungs-Messsignal ist.

9. Diagnoseverfahren nach einem der vorstehenden Ansprüche, wobei bei überschreiten eines vorgegebenen Schwellenwerts durch das erste oder gegebenenfalls das zweite Messsignal ein Warnsignal erzeugt wird.

10. Diagnoseverfahren nach einem der vorstehenden Ansprüche, ferner umfassend einen Hubtest, wie einen Teilhubtest oder einen Vollhubtest.

11. Stellgerät (1) für eine prozesstechnische Anlage, wie eine chemische Anlage, eine Lebensmittel verarbeitende Anlage oder dergleichen, umfassend einen Stellantrieb (3) mit einer Antriebswelle (13);
eine Stellarmatur (5), umfassend
ein Stellventil, mit einer Stellwelle (15) und einem drehbaren Ventilglied,
eine drehfeste Verbindung (17), die die Antriebswelle (13) und die Stellwelle (15) miteinander verbindet, und
eine Diagnosevorrichtung (21), die einen ersten Sensor, wie ein Drucksensor (23), ein Stellungssensor (24), ein Geschwindigkeitssensor, ein Kraftsensor, ein Drehmomentsensor, ein Beschleunigungssensor, ein optischer Sensor oder ein akustischer Sensor, sowie eine Diagnoseelektronik (27) aufweist, die mit dem ersten Sensor verbunden ist, um ein erstes Messsignal von dem ersten Sensor zu empfangen,
**dadurch gekennzeichnet, dass** die Diagnoseelektronik
dazu eingerichtet ist, einen zeitlichen Verlauf des ersten Messsignals oder einen zeitlichen Verlauf einer Ableitung des ersten Messsignals hinsichtlich einer sprungartigen Änderung auszuwerten, um ein Drehspiel zwischen der Stellwelle (15) und der Antriebswelle (13) zu erkennen.

12. Stellgerät nach Anspruch 11, wobei der erste Sensor auf die Antriebswelle (13), auf die Stellwelle (15) oder auf die drehfeste Verbindung (17) gerichtet ist.

13. Stellgerät nach Anspruch 11 oder 12, wobei die Diagnosevorrichtung (21) ferner einen zweiten mit der Diagnoseelektronik (27) verbundenen Sensor umfasst, wie Stellungssensor (25) oder ein Geschwindigkeitssensor, der eine andere physikalische Größe als der erste Sensor misst und/oder eine mit der Diagnoseelektronik (27) verbundene Einrichtung zum Erfassen eines Soll-Stellsignals (xₛₒₗₗ)oder eines elektrisches Steuersignals.

14. Stellgerät nach einem der Ansprüche 11 bis 13, wobei die Diagnoseelektronik (27) dazu eingerichtet ist, die Ableitung des ersten Messsignals bezüglich der anderen physikalischen Größe oder der Zeit (t) zu bestimmen.

15. Stellgerät nach einem der Ansprüche 11 bis 14, wobei die Diagnosevorrichtung (21) einen Stellungssensor, einen Geschwindigkeitssensor und/oder einen Beschleunigungssensor umfasst und wobei die Diagnoseelektronik (27) dazu eingerichtet ist, das Messsignal dieses Sensors zur Bestimmung der Amplitude des Drehspiels zu berücksichtigen.

## Claims

1. Diagnostic method for a control device (1) of a process engineering system, such as a chemical system, a food processing system or the like, which comprises an actuator (3) with a drive shaft (13) and a control fitting (5), comprising a control valve, with a control shaft (15) and a rotatable valve member, wherein the drive shaft (13) and the control shaft (15) are connected to one another in a rotationally fixed manner, wherein a first measurement signal is detected during a movement of the drive shaft (13), and wherein a time profile of the first measurement signal or a time profile of a derivative of the first measurement signal is evaluated with regard to a sudden change, in order to detect a rotational play between the control shaft (15) and the drive shaft (13).

2. Diagnostic method according to Claim 1, wherein the first measurement signal is a pressure measurement signal (pₐ, p_{b}) with respect to a pneumatic or hydraulic drive pressure or a pressure measurement signal with respect to a control pressure.

3. Diagnostic method according to Claim 1, wherein the first measurement signal is a position measurement signal (x₁₃, x₁₅) or a speed measurement signal (v), a force, torque or acceleration measurement signal, an optical or acoustic measurement signal.

4. Diagnostic method according to one of Claims 1 to 3, wherein the first measurement signal is detected with a sensor (24) directed at the drive shaft (13) or with a sensor (25) directed at the control shaft (15).

5. Diagnostic method according to one of Claims 1 to 3, wherein the first measurement signal is detected by a sensor directed at the rotationally fixed connection (17).

6. Diagnostic method according to one of the preceding claims, wherein the time (t), a setpoint control signal (xₛₒₗₗ), an electrical control signal and/or a second measurement signal, which relates to a different physical variable than the first measurement signal, is detected during the movement of the drive shaft (13).

7. Diagnostic method according to one of the preceding claims, wherein the derivative of the first measurement signal is related to the time (t) or the different physical variable.

8. Diagnostic method according to one of the preceding claims, wherein the first, if appropriate the second or a further measurement signal, which is a position measurement signal (x₁₃, x₁₅), a speed measurement signal (v) or an acceleration **measurement** signal, is taken into account in order to determine the amplitude of the rotational play.

9. Diagnostic method according to one of the preceding claims, wherein a warning signal is generated if a predefined threshold value is exceeded by the first or if appropriate the second measurement signal.

10. Diagnostic method according to one of the preceding claims, furthermore comprising a stroke test, such as a partial stroke test or a full stroke test.

11. Control device (1) for a process engineering system, such as a chemical system, a food processing system or the like, comprising
an actuator (3) with a drive shaft (13);
a control fitting (5), comprising a control valve, with a control shaft (15) and a rotatable valve member,
a rotationally fixed connection (17), which connects the drive shaft (13) and the control shaft (15) to one another, and
a diagnostic device (21), which has a first sensor, such as a pressure sensor (23), a position sensor (24), a speed sensor, a force sensor, a torque sensor, an acceleration sensor, an optical sensor or an acoustic sensor, and a diagnostic electronics system (27), which is connected to the first sensor, in order to receive a first measurement signal from the first sensor, **characterized in that** the diagnostic electronics system is set up to evaluate a time profile of the first measurement signal or a time profile of a derivative of the first measurement signal with regard to a sudden change, in order to detect a rotational play between the control shaft (15) and the drive shaft (13).

12. Control device according to Claim 11, wherein the first sensor is directed at the drive shaft (13), at the control shaft (15) or at the rotationally fixed connection (17).

13. Control device according to Claim 11 or 12, wherein the diagnostic device (21) furthermore comprises a second sensor connected to the diagnostic electronics system (27), such as a position sensor (25) or a speed sensor, which measures a different physical variable than the first sensor and/or a device connected to the diagnostic electronics system (27) for detecting a setpoint control signal (xₛₒₗₗ) or an electrical control signal.

14. Control device according to one of Claims 11 to 13, wherein the diagnostic electronics system (27) is configured to determine the derivative of the first measurement signal with respect to the different physical variable or the time (t).

15. Control device according to one of Claims 11 to 14, wherein the diagnostic device (21) comprises a position sensor, a speed sensor and/or an acceleration sensor and wherein the diagnostic electronics system (27) is configured to take into account the measurement signal of this sensor in order to determine the amplitude of the rotational play.

## Revendications

1. Procédé de diagnostic pour un dispositif de réglage (1) d'une installation de génie des procédés, telle qu'une installation chimique, une installation de transformation de produits alimentaires ou similaire, lequel comprend un actionneur (3) doté d'un arbre d'entraînement (13) et une robinetterie de réglage (5), comprenant une vanne de réglage, dotée d'un arbre de réglage (15) et d'un rotatif élément de vanne, l'arbre d'entraînement (13) et l'arbre de réglage (15) étant reliés l'un avec l'autre de manière solidaire en rotation, pendant un déplacement de l'arbre d'entraînement (13) étant détecté un premier signal de mesure et une courbe temporelle du premier signal de mesure ou une courbe temporelle d'une dérivée du premier signal de mesure au niveau d'une brusque variation étant évaluée, pour identifier un jeu angulaire entre l'arbre de réglage (15) et l'arbre d'entraînement (13).

2. Procédé de diagnostic selon la revendication 1, le premier signal de mesure étant un signal de mesure de pression (pₐ, p_{b}) concernant une pression d'entraînement pneumatique ou hydraulique ou un signal de mesure de pression concernant une pression de réglage.

3. Procédé de diagnostic selon la revendication 1, le premier signal de mesure étant un signal de mesure de position (x₁₃, x₁₅) ou un signal de mesure de vitesse (v), un signal de mesure de force, de couple de rotation ou d'accélération, un signal de mesure optique ou acoustique.

4. Procédé de diagnostic selon l'une quelconque des revendications 1 à 3, le premier signal de mesure étant détecté à l'aide d'un capteur (24) dirigé vers l'arbre d'entraînement (13) ou à l'aide d'un capteur (25) dirigé vers l'arbre de réglage (15).

5. Procédé de diagnostic selon l'une quelconque des revendications 1 à 3, le premier signal de mesure étant détecté par un capteur dirigé vers la liaison (17) solidaire en rotation.

6. Procédé de diagnostic selon l'une quelconque des revendications précédentes, pendant le déplacement de l'arbre d'entraînement (13), le temps (t), un signal **de réglage** de consigne (pₛₒₗₗ), un signal de commande électrique et / ou un deuxième signal de mesure étant détecté, qui se rapporte à une grandeur physique autre que le premier signal de mesure.

7. Procédé de diagnostic selon l'une quelconque des revendications précédentes, la dérivée du premier signal de mesure étant rapportée au temps (t) ou rapportée à l'autre grandeur physique.

8. Procédé de diagnostic selon l'une quelconque des revendications précédentes, pour déterminer l'amplitude du jeu angulaire, le premier, le deuxième ou un signal de mesure supplémentaire étant pris en compte, qui est un signal de mesure de position (x₁₃, x₁₅), un signal de mesure de vitesse (v) ou un signal de mesure d'accélération.

9. Procédé de diagnostic selon l'une quelconque des revendications précédentes, un signal d'alerte étant généré lors d'un dépassement d'une valeur seuil prédéfinie par le premier ou le cas échéant par le deuxième signal de mesure.

10. Procédé de diagnostic selon l'une quelconque des revendications précédentes, comprenant par ailleurs un essai de course, tel qu'un essai de course partielle ou un essai de course complète.

11. Dispositif de réglage (1) pour une installation de génie des procédés, telle qu'une installation chimique, une installation de transformation de produits alimentaires ou similaire, comprenant
un actionneur (3) doté d'un arbre d'entraînement (13) ;
une robinetterie de réglage (5), comprenant
une vanne de réglage, dotée d'un arbre de réglage (15) et d'un élément de vanne rotatif,
une liaison (17) solidaire en rotation, qui relie l'un avec l'autre l'arbre d'entraînement (13) et l'arbre de réglage (15) et
un dispositif de diagnostic (21), qui comporte un premier capteur, tel qu'un capteur de pression (23), un capteur de position (24), un capteur de vitesse, un capteur de force, un capteur de couple de rotation, un capteur d'accélération, un capteur optique ou un capteur acoustique, ainsi qu'un système électronique (27) de diagnostic, qui est relié avec le premier capteur, pour réceptionner un premier signal de mesure de la part du premier capteur,
**caractérisé en ce que** le système électronique de diagnostic est configuré pour évaluer au niveau d'une brusque variation une courbe temporelle du premier signal de mesure ou une courbe temporelle d'une dérivée du premier signal de mesure, pour identifier un jeu angulaire entre l'arbre de réglage (15) et l'arbre d'entraînement (13).

12. Dispositif de réglage selon la revendication 11, le premier capteur étant dirigé vers l'arbre d'entraînement (13), vers l'arbre de réglage (15) ou vers la liaison (17) solidaire en rotation.

13. Dispositif de réglage selon la revendication 11 ou 12, le dispositif de diagnostic (21) comprenant par ailleurs un deuxième capteur relié avec le système électronique (27) de diagnostic, tel qu'un capteur de position (25) ou un capteur de vitesse qui mesure une grandeur physique autre que le premier capteur ou un système relié avec le système électronique (27) de diagnostic, pour détecter un signal de réglage de consigne (xₛₒₗₗ) ou un signal électrique de commande.

14. Dispositif de réglage selon l'une quelconque des revendications 11 à 13, le système électronique (27) de diagnostic étant configuré pour déterminer la dérivée du premier signal de mesure concernant l'autre grandeur physique ou le temps (t).

15. Dispositif de réglage selon l'une quelconque des revendications 11 à 14, le dispositif de diagnostic (21) comprenant un capteur de position, un capteur de vitesse et / ou un capteur d'accélération et le système électronique (27) de diagnostic étant configuré pour prendre en compte le signal de mesure dudit capteur pour déterminer l'amplitude du jeu angulaire.
